## Europäisches Patentamt
## European Patent Office
## Office européen des brevets

(11) Numéro de publication: **0 073 724**
**A1**

(12) ## DEMANDE DE BREVET EUROPEEN

(21) Numéro de dépôt: 82401601.8

(51) Int. Cl.³: **B 23 Q 1/00, A 01 B 59/043**

(22) Date de dépôt: 30.08.82

---

(30) Priorité: 02.09.81 FR 8116692

(43) Date de publication de la demande: 09.03.83
Bulletin 83/10

(84) Etats contractants désignés: **DE GB IT**

(71) Demandeur: **ACMA-CRIBIER, 3-15 rue Denis Papin,
F-92250 Beauchamp (FR)**

(72) Inventeur: **Maingonnat, René, 4, Allée de Champagne
Clos Saint Georges, F-95000 Le Plessis Bouchard (FR)**

(74) Mandataire: **Réal, Jacques et al, Régie Nationale des
Usines Renault SCE 0804, F-92109 Boulogne Billancourt
Cedex (FR)**

---

(54) **Système de verrouillage et deverrouillage d'un composant déplacable de machine ou analogue.**

(57) L'invention concerne un système de verrouillage d'un composant mécanique déplaçable pour verrouiller celui-ci dans une position de travail par rapport à un autre composant, ou pour le déverrouiller à l'aide de moyens de manipulations télécommandés comprenant des moyens de levage et de préhension qui coopèrent avec des moyens de verrouillage dudit système.

Ce système est caractérisé en ce que les moyens de verrouillage comportent au moins un levier de verrouillage (8, 23, 36, 47) articulé sur ledit composant déplaçable (1, 20, 30) et capable de pivoter entre une position de verrouillage dans laquelle un premier bras (13, 37) du levier accroche un élément d'accrochage (11, 26, 31, 51) dudit autre composant (12, 21, 32) et une position de déverrouillage dans laquelle ledit premier bras de levier est dégagé dudit élément d'accrochage, ledit levier de verrouillage étant agencé et monté de façon telle qu'il soit sollicité, par l'effet de la gravité ou d'un élément amovible de maintien (40) s'opposant à l'action de la gravité, vers ladite position de verrouillage, cependant qu'un deuxième bras (14, 39) du levier de verrouillage est appelé à coopérer aver lesdits moyens de préhension (17) et de levage de manière à faire pivoter ledit levier de verrouillage de la position de verrouillage vers la position de déverrouillage sous l'effet d'une force de traction dirigée sensiblement verticalement vers le haut, exercée par lesdits moyens de levage par l'intermédiaire desdits moyens de préhension.

Application aux dispositifs de manipulation à distance d'éléments ou ensembles mécaniques et analogues.

SYSTEME DE VERROUILLAGE ET DEVERROUILLAGE
D'UN COMPOSANT DEPLACABLE DE MACHINE OU
ANALOGUE.

La présente invention concerne un système de verrouillage et déverrouillage d'un composant déplaçable de machine ou analogue. Elle vise plus particulièrement à un système de ce genre qui comporte des moyens de verrouillage permettant sélectivement de verrouiller le composant déplaçable dans une position
de travail par rapport à au moins un autre composant de ladite machine et de
libérer ledit composant déplaçable dudit autre composant, ledit composant
déplaçable étant susceptible d'être manipulé à l'aide de moyens manipulateurs
télécommandés comprenant des moyens de levage associés à des moyens de préhension
appelés à coopérer avec lesdits moyens de verrouillage.

Il existe de nombreuses installations dans lesquelles des constituants ou
composants mécaniques mobiles, qui sont accouplés, dans la condition de travail,
à un composant associé, doivent être désaccouplés et, le cas échéant, retirés
de l'installation, aux fins de remplacement, réparation ou analogues. Lorsqu'une
telle installation se trouve dans un site qui en rend l'accès difficile, voire
dangereux, on utilise, pour effectuer cette opération de désaccouplement et/ou
de démontage, des dispositifs manipulateurs télécommandés bien connus en eux-mêmes.
Or, les systèmes de verrouillage et déverrouillage connus présentent l'inconvénient d'être relativement complexes et, par conséquent, onéreux. En raison de leur
complexité, ils sont, de plus, dans bien des cas, sujets à des défaillances de
fonctionnement qui peuvent être lourdes de conséquences techniques et économiques
indésirables, et qui peuvent même comporter des risques graves pour l'environnement
lorsque l'installation ou machine se trouve à l'intérieur d'une enceinte renfermant une atmosphère dangereuse en raison de sa température, de sa toxicité etc.

La présente invention a pour but de créer un système de verrouillage et déverrouillage du type défini ci-dessus, qui ne présente pas les inconvénients des systèmes classiques; l'invention vise donc un système de verrouillage et de déverrouillage d'une construction particulièrement simple et peu onéreuse, qui fonctionne d'une manière parfaitement sûre et qui s'applique aisément à des machines,
installations, etc., les plus diverses.

0073724

Le système faisant l'objet de la présente invention, qui permet d'atteindre ce but, est remarquable notamment en ce que les moyens de verrouillage précités comportent au moins un levier de verrouillage articulé sur ledit composant déplaçable et capable de pivoter entre une position de verrouillage dans laquelle un premier bras du levier accroche un élément d'accrochage dudit autre composant et une position de déverrouillage dans laquelle ledit premier bras de levier est dégagé dudit élément d'accrochage, ledit levier de verrouillage étant agencé et monté de façon telle qu'il soit sollicité, par l'effet de la gravité ou d'un élément amovible de maintien s'opposant à l'action de la gravité, vers ladite position de verrouillage, cependant qu'un deuxième bras du levier de verrouillage est appelé à coopérer avec lesdits moyens de préhension et de levage de manière à faire pivoter ledit levier de verrouillage de la position de verrouillage vers la position de déverrouillage sous l'effet d'une force de traction dirigée sensiblement verticalement vers le haut, exercée par lesdits moyens de levage par l'intermédiaire desdits moyens de préhension.

Selon un mode de réalisation de l'invention, l'agencement est tel que, dans ladite position de déverrouillage, le composant déplaçable soit démontable de la machine ou analogue par un déplacement vertical vers le haut imprimé audit composant déplaçable par lesdits moyens de levage et de préhension.

Selon une des caractéristiques de l'invention, ledit premier bras du levier de verrouillage forme une encoche coopérant avec un évidement ménagé dans un élément de verrouillage solidaire dudit composant déplaçable de manière à emprisonner, dans la position de verrouillage, ledit élément d'accrochage de l'autre composant précité, dans ledit évidement, et à libérer cet élément d'accrochage dans ladite position de déverrouillage.

Selon une autre caractéristique de l'invention, ledit deuxième bras du levier de verrouillage coopère avec au moins un crochet de préhension ou analogue associé à un dispositif de levage et appelé à être accroché audit levier de verrouillage, de manière à exercer sur ledit composant déplaçable ladite force de traction verticale.

Selon encore une autre caractéristique de l'invention, le point d'attaque de ladite force de traction verticale audit deuxième bras du levier de verrouillage est choisi de façon telle qu'il se situe dans un plan vertical décalé latéralement d'une distance prédéterminée du plan vertical contenant le point d'articulation du levier de verrouillage sur ledit composant déplaçable lorsque le levier de verrouillage est dans la position de verrouillage, et que ce point d'attaque se rapproche dudit plan vertical contenant le point d'articulation précité lorsque le levier de verrouillage est déplacé angulairement sous l'effet de ladite force de traction verticale.

Dans un autre mode de réalisation, le système de verrouillage et déverrouillage selon l'invention comporte deux leviers de verrouillage articulés sur un élément de montage et dont les axes de pivotement respectifs sont espacés horizontalement l'un de l'autre, cependant que les premiers bras respectifs s'étendent obliquement vers le bas et l'un vers l'autre à partir desdits axes d'articulation, chacun desdits premiers bras étant pourvu d'un évidement ouvert à l'extrémité inférieure du bras intéressé et appelé à s'engager sur ledit élément d'accrochage et à emprisonner celui-ci lorsque chacun des deux leviers de verrouillage est déplacé angulairement et symétriquement par rapport à l'autre levier vers ladite position de verrouillage, dans laquelle lesdits leviers sont maintenus par l'effet dudit élément de maintien amovible calé entre les deuxièmes bras respectifs desdits leviers de verrouillage, qui s'étendent vers le haut à partir des axes d'articulation.

Selon une particularité de ce mode de réalisation, ledit élément de montage comporte des moyens d'accrochage d'un crochet de levage ou analogue, qui sont situés au milieu entre les deux axes d'articulation respectifs desdits leviers de verrouillage.

Dans un mode de réalisation particulier de l'invention, ledit premier bras du levier de verrouillage porte un élément faisant fonction de came, appelé à s'appliquer, dans ladite position de verrouillage, sous une cale fixe prévue sur ledit autre composant de la machine, et à être dégagé de cette cale fixe lorsque le levier de déverrouillage est amené vers la position de déverrouillage.

L'invention sera décrite ci-dessous de manière plus détaillée en référence aux figures annexées qui sont données à titre d'illustration, mais non de limitation.

La figure 1 montre un système de verrouillage et déverrouillage selon l'invention, vu de côté, en position de verrouillage, ce système étant associé à un vérin.

La figure 2 montre le sytème de la figure 1 en position de déverrouillage, le vérin étant amené sensiblement dans une position dans laquelle il peut être retiré de son emplacement normal de service.

La figure 3 montre en élévation, un autre mode de réalisation du système de verrouillage et déverrouillage selon l'invention, en position de verrouillage, ce système étant associé à un vérin.

La figure 4 représente le sytème de la figure 3 en position de déverrouillage, le composant déplaçable associé étant partiellement démonté de l'installation ou machine associée.

La figure 5 montre, en élévation, encore un autre mode de réalisation du système selon l'invention, en position de verrouillage.

La figure 6 est une vue analogue à la figure 5 et montre le même système en position de déverrouillage.

La figure 7 montre en élévation et en position de verrouillage un mode de réalisation du système de verrouillage et déverrouillage selon l'invention, associé au vérin des figures 5 et 6 en même temps que le système représenté sur ces deux figures précédentes.

La figure 8 est une vue en élévation prise dans le sens des flèches VIII-VIII de la figure 7 et illustrant la position de verrouillage du système.

La figure 9 est une vue analogue à celle de la figure 8 et montre le même système en position de déverrouillage, le vérin associé étant partiellement retiré de l'installation ou machine associée.

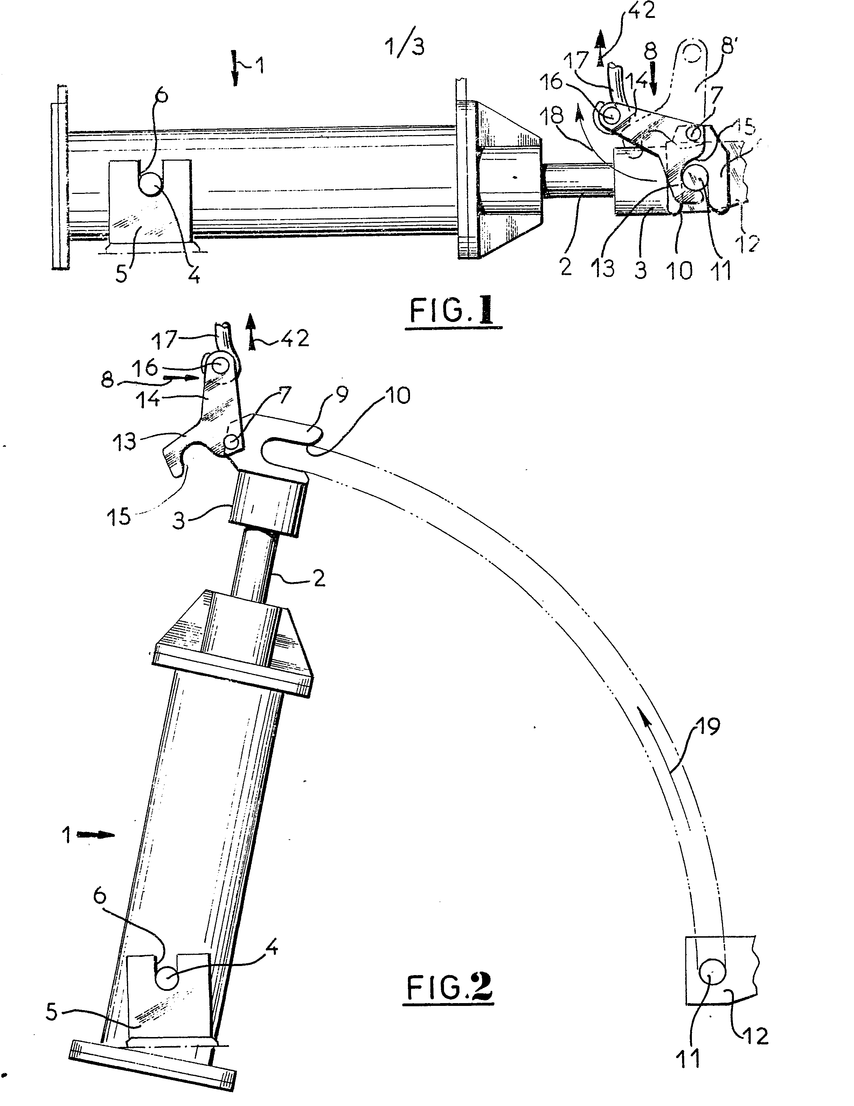

La figure 1 montre un vérin 1 pourvu de tourillons latéraux horizontaux 4 alignés l'un sur l'autre au moyen desquels il est monté à pivotement dans des évidements 6 alignés, ouverts vers le haut, qui sont ménagés dans des supports 5. La tige de piston 2 du vérin 1 porte une tête de vérin 3 sur laquelle est articulé, en 7, un levier de verrouillage 8. L'axe d'articulation 7 de ce levier 8 est monté sur une pièce en forme de chape 9 définissant un évidement 10 allongé qui s'étend perpendiculairement à l'axe longitudinal du vérin et qui est appelé à recevoir un pivot 11 solidaire d'un composant de machine 12 ou analogue destiné à être actionné par le vérin 1.

Le levier 8 comprend un premier bras de levier 13 pourvu d'une encoche 15 susceptible de venir s'engager sur le pivot 11 lorsque, dans la position de travail, ce dernier est engagé dans l'évidement 15, et d'emprisonner ainsi ledit pivot comme l'indique la figure 1. Ainsi qu'il ressort également de cette figure, dans la position de travail, le vérin 1 est placé horizontalement et lié cinétiquement au composant 12. Le levier de verrouillage 8 est agencé de façon telle que, par l'effet de la gravité, il soit engagé sur le pivot 11 et emprisonne celui-ci dans l'évidement 10 comme indiqué ci-dessus, c'est-à-dire, que par gravité, le levier 8 vient se placer et reste maintenu dans une position de verrouillage dans laquelle le vérin peut agir sur le composant 12 sans que le pivot 11 solidaire de ce dernier ne puisse se détacher de la tête du vérin.

Le deuxième bras 14 du levier de verrouillage 8 comporte un élément d'accrochage, tel qu'un pivot 16 auquel peut être accroché un organe de préhension, par exemple un crochet 17 lié à un dispositif de levage (non représenté). Lorsque ce dispositif de levage exerce, par l'intermédiaire du crochet 17, une force de traction verticale agissant vers le haut dans le sens de la flèche 42 sur le levier 8, celui-ci se déplace angulairement dans le sens de la flèche 18 (figure 1) pour atteindre la position indiqué en 8' par des traits mixtes. Dans cette position, le pivot 11 du composant 12 n'est plus emprisonné par la chape 9 et le levier 8, cette position définissant donc une position de déverrouillage. Lorsque le dispositif de levage précité continue à appliquer la force de traction verticale précitée, le vérin est déplacé angulairement dans le sens de la flèche 19 (figure 2) jusque dans une position sensiblement verticale à partir de laquelle il peut être dégagé et retiré du support 4 sous l'effet de la force de traction exercée par le dispositif de levage associé au crochet 17.

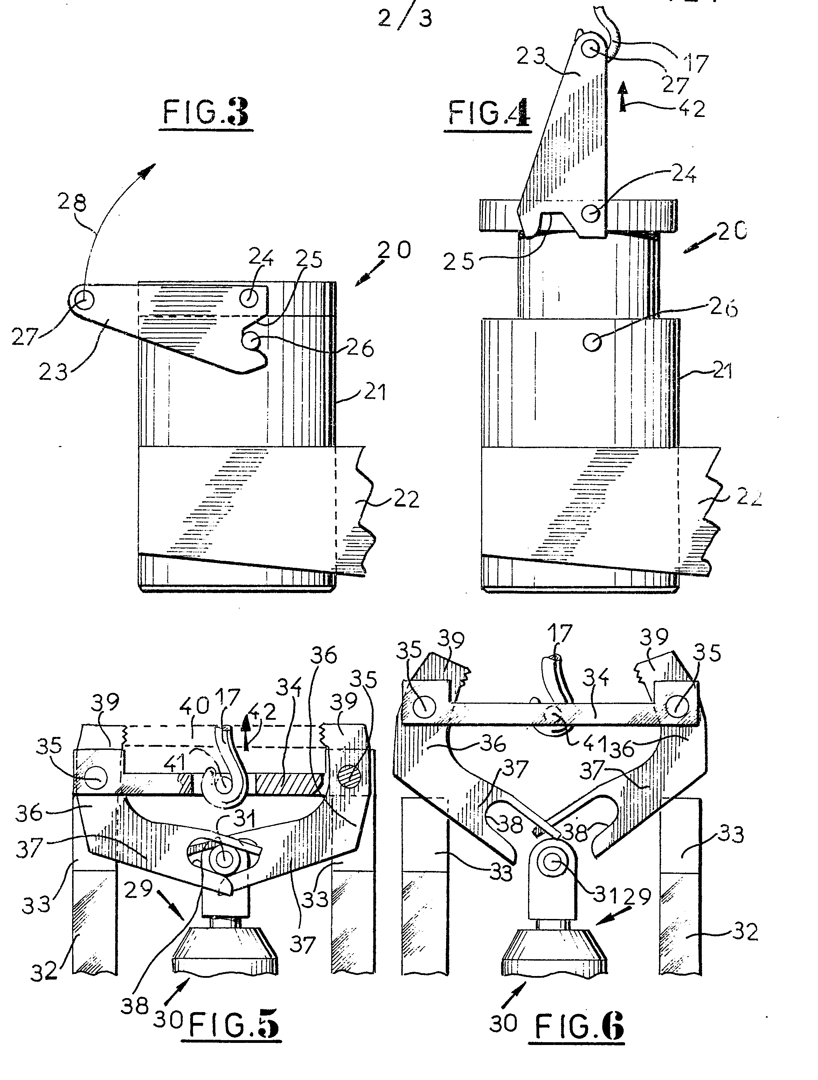

Dans le mode de réalisation de la figure 3, un composant déplaçable 20 est monté à coulissement vertical dans un autre composant de machine 21 ou analogue maintenu par un élément de fixation 22. Dans la position de travail représentée sur la figure 3, le composant déplaçable 20 est bloqué par rapport au composant 21 par un levier de verrouillage 23 articulé en 24 sur le composant 20 et pourvu d'une encoche 25 coopérant avec un pivot 26 sur lequel le levier 23 s'engage grâce à l'encoche 25 sous l'effet de la gravité, étant donné que la partie du levier définie entre la zone de l'axe d'articulation 24 et la zone de l'encoche 25, et qui constitue un premier bras dudit levier, présente une masse moindre que le deuxième bras de ce levier, qui est défini par la partie de ce dernier qui est située entre la zone de l'axe d'articulation 24 et un piton 27 appelé à coopérer avec un crochet 17 ou analogue d'un dispositif de levage.

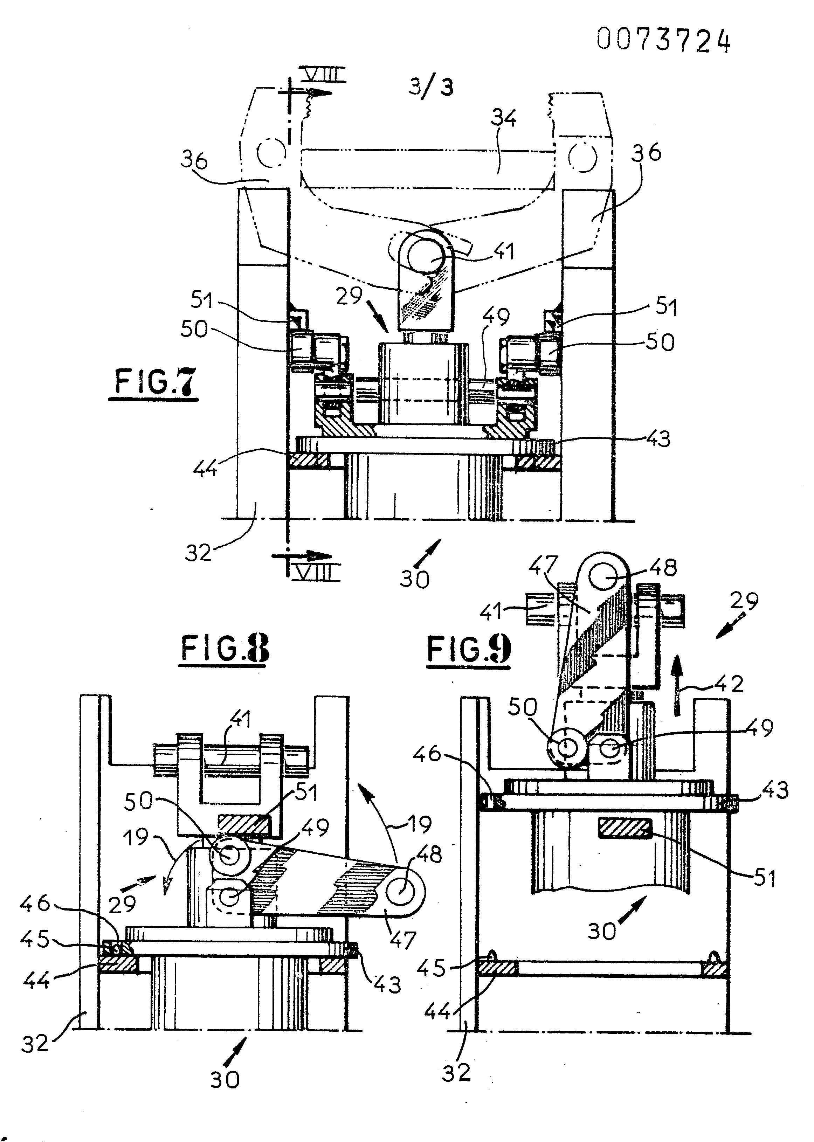

Lorsqu'on désire déverrouiller le composant déplaçable 20 par rapport au composant fixe 21, on accroche le crochet 17 au piton 27 et l'on applique au crochet 17 à l'aide du dispositif de levage (non représenté) une force de traction verticale dirigée vers le haut (voir la flèche 42, figure 4). Le levier de verrouillage se déplace alors angulairement dans le sens de la flèche 28 (figure 3) et libère ainsi le pivot 26. En continuant d'appliquer ladite force de traction, on peut ensuite, comme indiqué sur la figure 4, démonter le composant déplaçable 20 du composant fixe 21.

Dans l'ensemble représenté sur les figures 5 à 9, la tête 28 d'un vérin 30 comporte un pivot horizontal 31. Le vérin 30 est monté dans une enveloppe verticale fixe 32 pourvue de deux fentes verticales 33 opposées. Un élément de montage 34 sensiblement horizontal porte à chacune de deux extrémités opposées un axe d'articulation 35. Sur chaque axe 35 tourillone un levier de verrouillage 36 définissant un premier bras 37 dirigé vers le bas et incliné vers l'axe vertical de l'ensemble constitué par l'élément de montage 34 et les leviers 36. Chacun des bras de levier 37 présente un évidement d'extrémité 38, l'agencement étant tel que, lorsque l'ensemble précité est mis en place dans les fentes verticales 33, les évidements 38 respectifs des leviers 36 viennent s'engager à partir de deux côtés opposés sur

6

0073724

le pivot 31 de la tête de vérin 29 et emprisonnent ce pivot, la tige de piston (donc la tête) du vérin étant en position rétractée (basse). Pour maintenir les leviers 36 dans cette position de verrouillage, on place entre les deuxièmes bras respectifs 39 des leviers 36 un élément de maintien 40 amovible qui peut être, le cas échéant, un élément intervenant dans les fonctions de la machine ou analogue à laquelle le système décrit est associé. Pour bien serrer l'élément 40, il suffit alors de faire remonter dans une mesure appropriée la tête de vérin 29 en agissant de manière convenable sur le vérin 30.

En vue du déverrouillage et du démontage, on retire l'élément de maintien 40, on accroche un crochet 17 associé à un dispositif de levage (non représenté) à un pivot d'accrochage 41 prévu sur la partie centrale de l'élément de montage 34, on rabaisse, en agissant sur le vérin 30, la tête de vérin 29 pour permettre au pivot 31 de se dégager des évidements 38 des leviers 36, les premiers bras respectifs 37 de ces leviers s'écartant alors l'un de l'autre sous l'effet de la gravité, grâce à leur configuration et à leur mode de montage sur l'élément 34 tel que représenté sur les figures 5 et 6. On peut ensuite, à l'aide du dispositif de levage et du crochet 17 associé, soulever et retirer, dans le sens de la flèche 42 (figure 5), l'ensemble formé par les leviers 36 et l'élément de montage, comme indiqué sur la figure 6, qui montre ledit ensemble dans la position déverrouillée et partiellement retirée de la machine ou installation associée.

Les figures 7 à 9 montrent un autre mode de réalisation du système selon l'invention, utilisé en combinaison avec le système décrit ci-dessus en référence aux figures 5 et 6, qui est représenté en traits mixtes sur la figure 7.

Ainsi qu'il ressort des figures 7 à 9, le cylindre du vérin 30 comporte une bride circulaire 43 reposant sur un épaulement circulaire 44 prévu à l'intérieur de l'enveloppe fixe 32, le vérin est immobilisé angulairement par rapport à l'épaulement 43 par au moins une protubérance 45 verticale solidaire de l'épaulement 44 et s'engageant, dans la position de travail du vérin, dans un trou vertical 46 ménagé dans la bride 43.

Un tourillon 49 horizontal est monté à rotation sur la tête de vérin 29 et sert d'axe d'articulation à deux leviers symétriques de verrouillage 47 solidaires dudit tourillon (figures 8 et 9). Un premier bras de chaque levier est défini entre l'axe 49 et une came 50 en forme de rouleau monté à rotation sur le levier 47, cependant qu'un deuxième bras de ce levier, plus long que le premier, est défini entre ledit axe 49 et un oeuillet 48 appelé à recevoir un crochet associé à un dispositif de levage (non représentés). Dans la position de travail, les leviers 47 sont disposés horizontalement (figure 8), de sorte que la came 50 se situe sensiblement verticalement au-dessus de l'axe d'articulation, ou tou-

0073724

rillon 49, cependant que l'oeillet 48 est décalé horizontalement par rapport à cet axe. Dans cette position, la came 50 de chaque levier 47 est accrochée sous une cale 51 fixée à l'intérieur de l'enveloppe 32, et par conséquent, le vérin 30 est alors verrouillé dans sa position de travail dans ladite enveloppe. Grâce à l'agencement décrit ci-desssu du levier, celui-ci est maintenu dans sa position horizontale -c'est-à-dire dans la position de verrouillage- par l'effet de la gravité.

Lorsque, après avoir retiré l'ensemble constitué par les leviers de verrouillage 36 et l'élément de montage 34 associé, comme décrit en référence aux figures 5 et 6, on désire déverrouiller le vérin 30 par rapport à l'enveloppe 32 et le démonter, on introduit le crochet du dispositif de levage précité (non représenté) dans l'oeillet 48 et l'on exerce, à l'aide de ce dispositif et du crochet, une force de traction sensiblement verticale dirigée vers le haut sur le levier 47 qui se déplace alors angulairement dans le sens de la flèche 19 (figure 8) pour atteindre une position sensiblement verticale dans laquelle la came 50 est dégagée de la cale fixe 51, après quoi le vérin est retiré de l'enveloppe 32 par un mouvement vertical ascendant, lorsque le dispositif de levage précité continue d'appliquer sur le levier 47 la force de traction verticale susmentionnée, par l'intermédiaire dudit crochet introduit dans l'oeillet 48.

Bien entendu, la présente invention n'est nullement limitée aux modes de réalisation décrits et représentés; elle est susceptible de nombreuses variantes accessibles à l'homme de l'art, suivant les applications envisagées et sans que l'on ne s'écarte de l'esprit de l'invention.

REVENDICATIONS

1.- Système de verrouillage et déverrouillage d'un composant déplaçable de machine ou analogue, comportant des moyens de verrouillage qui permettent sélectivement de verrouiller ce composant déplaçable dans une position de travail par rapport à au moins un autre composant de ladite machine et de libérer ledit composant déplaçable dudit autre composant, ledit composant déplaçable étant susceptible d'être manipulé à l'aide de moyens manipulateurs télécommandés comprenant des moyens de levage associés à des moyens de préhension appelés à coopérer avec lesdits moyens de verrouillage, caractérisé en ce que lesdits moyens de verrouillage comportent au moins un levier de verrouillage (8, 23, 36, 47) articulé sur ledit composant déplaçable (1, 20, 30) et capable de pivoter entre une position de verrouillage dans laquelle un premier bras (13, 37) du levier accroche un élément d'accrochage (11, 26, 31, 51) dudit autre composant (12, 21, 32) et une position de déverrouillage dans laquelle ledit premier bras de levier est dégagé dudit élément d'accrochage, ledit levier de verrouillage étant agencé et monté de façon telle qu'il soit sollicité, par l'effet de la gravité ou d'un élément amovible de maintien (40) s'opposant à l'action de la gravité, vers ladite position de verrouillage, cependant qu'un deuxième bras (14, 39) du levier de verrouillage est appelé à coopérer avec lesdits moyens de préhension (17) et de levage de manière à faire pivoter ledit levier de verrouillage de la position de verrouillage vers la position de déverrouillage sous l'effet d'une force de traction dirigée sensiblement verticalement vers le haut, exercée par lesdits moyens de levage par l'intermédiaire desdits moyens de préhension.

2.- Système selon la revendication 1, caractérisé en ce que l'agencement est tel que, dans ladite position de déverrouillage, le composant déplaçable (1) soit démontable de la machine ou analogue par un déplacement vertical vers le haut imprimé audit composant déplaçable par lesdits moyens de levage et de préhension.(17).

3.- Système selon la revendication 1 ou 2, caractérisé en ce que ledit premier bras du levier de verrouillage forme une encoche (15) coopérant avec un évidement (10) ménagé dans un élément de verrouillage (9) solidaire dudit composant déplaçable (1) de manière à emprisonner, dans la position de verrouillage, ledit élément d'accrochage (11) de l'autre composant (12) précité, dans ledit évidement, et à libérer cet élément d'accrochage dans ladite position de déverrouillage.

4.- Système selon une quelconque des revendications 1 à 3, caractérisé en ce que ledit deuxième bras du levier de verrouillage (8, 23, 37, 47) coopère avec au moins un crochet de préhension (17) ou analogue associé à un dispositif de le age t appelé à être accroché audit levier de verrouillage, de man ère à exercer sur ledit composant déplaçable (1, 20, 30) ladite force de traction verticale.

5.- Système selon une quelconque des revendications 1 à 4, caractérisé en ce que le point d'attaque de ladite force de traction verticale audit deuxième bras du levier de verrouillage (8, 23, 47) est choisi de façon telle qu'il se situe dans un plan vertical décalé latéralement d'une distance prédé te minée du plan vertical contenant le point d'articulation (7, 24, 49) du levier de verrouillage sur ledit composant déplaçable (1, 20, 30) lorsque le levier de verrouillage est dans la position de verrouillage, et que ce point d'attaque se rapproche dudit plan vertical contenant le point d'articulation précité lors le levier de verrouillage est déplacé angulairement sous l'effet de ladite forc de traction verticale.

6.- Système selon une quelconque des revendications 1 ou 3 à 5, caracté i en ce qu'il comporte deux leviers de verrouillage (36) articulés sur un élément de montage (34) et dont les axes de pivotement respectifs (35) sont espacés horizontalement l'un de l'autre, cependant que les premiers bras (37) respectifs s'étendent obliquement vers le bas et l'un vers l'autre à partir desdits axes d'articulation, chacun desdits premiers bras étant pourvu d'un évidement (38) ouvert à l'extrémité inférieure du bras intéressé et appelé à s'engager sur ledit élément d'accrochage (31) et à emprisonner celui-ci lorsque chacun des deux leviers de verrouillage est déplacé angulairement et symétriquement par rapport à l'autre levier vers ladite position de verrouillage, dans laquelle lesdits leviers sont maintenus par l'effet dudit élément de maintien amovible (40) calé entre les deuxièmes bras (39) respectifs desdits leviers de verrouillage, qui s'étendent vers le haut à partir des axes d'articulation.

7.- Système selon la revendication 6, caractérisé en ce que ledit élément de montage comporte des moyens d'accrochage d'un crochet de levage ou analogue, qui sont situés au milieu entre les deux axes d'articulation respectifs desdits leviers de verrouillage.

8.- Système selon une quelconque des revendications 1, 2, 4 et 5, caractérisé en ce que ledit premier bras du levier de verrouillage (47) porte un élément faisant fonction de came (50), appelé à s'appliquer, dans ladite position de verrouillage, sous une cale fixe (51) prévue sur ledit autre composant (32) de la machine et à être dégagé de cette cale fixe lorsque le levier de déverrouillage est amené vers la position de déverrouillage.

0073724

FIG.1

FIG.2

0073724

FIG.3

FIG.4

FIG.5

FIG.6

**FIG.7**

**FIG.8**

**FIG.9**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| | --- | | B 23 Q 1/00 |
| A | FR-A-2 342 629 (CANU) | 1-8 | A 01 B 59/043 |
| | --- | | |
| A | FR-A-2 265 564 (WALTERSCHEID) | | |
| | --- | | |
| A | US-A-4 066 110 (SARMO) | | |
| | ----- | | |

**DOMAINES TECHNIQUES RECHERCHES (Int. Cl. 3)**

B 23 Q
A 01 B
F 15 B

Le présent rapport de recherche a été établi pour toutes les revendications

| Lieu de la recherche | Date d'achèvement de la recherche | Examinateur |
|---|---|---|
| LA HAYE | 16-12-1982 | DE GUSSEM J.L. |

Office européen des brevets